# EUROPEAN PATENT APPLICATION

(11) **EP 2 316 792 A1**
(43) Date of publication of application: **04.05.2011**
(21) Application number: 09174211.4
(22) Date of filing: 27.10.2009
(51) Int. Cl.: C01C 1/04

(54) **Ammonia production process**

(71) Applicant: Ammonia Casale S.A., 6900 Lugano-Besso (CH)
(72) Inventor: Iob, Massimo, 6900 Lugano (CH)
(74) Representative: Zardi, Marco

(57) **Abstract**

A process for the synthesis of ammonia, where: a front-end produces a make-up syngas (10) having a substantial excess of nitrogen, the H₂/N₂ ratio being less than 3; hydrogen is separated from a purge stream (15) taken in the high-pressure synthesis loop, with a molecular sieve or a cryogenic device, obtaining a hydrogen-rich gaseous stream (16); said hydrogen-rich gaseous stream (16) is returned to the ammonia synthesis loop, thus obtaining that the H₂/N₂ ratio of the gas feed (12) actually converted into ammonia is close to 3 and preferably in the range 2.9-3.1.

## Description

### Field of the invention

The present invention relates to a process for production of ammonia. More in detail, the invention relates to a process where ammonia is produced by catalytic reaction of a make-up synthesis gas in a high-pressure synthesis loop, and the make-up syngas is produced by reforming a hydrocarbon feedstock.

### Prior Art

A known process to produce ammonia involves the catalytic reaction of a make-up synthesis gas comprising hydrogen and nitrogen, in a high-pressure (HP) synthesis loop usually operating at around 80 - 300 bar pressure. The make-up syngas is produced in a front-end section, upstream the synthesis loop, by reforming a suitable hydrocarbon feed such as natural gas. For example, the hydrocarbon feed is desulphurized, then steam-reformed in a primary reformer, obtaining a first gas product containing CO, CO₂ and H₂ at a temperature around 800°C; the first gas product is further reacted with air, enriched air or oxygen in a secondary reformer or auto-thermal reformer (ATR), obtaining a second gas product at around 1000 °C; said second gas product is then treated in a series of equipments including shift converters where CO is converted to carbon dioxide and hydrogen; a CO₂-removal unit and a methanator. A main compression section, usually with a multi-stage compressor, feeds the make-up syngas to the HP synthesis loop.

The theoretical stoichiometric ratio between hydrogen and nitrogen is 3:1, in order to achieve the synthesis of the ammonia NH₃. However, sometimes an excess of nitrogen is introduced into the make-up syngas with the air feed of the secondary reformer.

It is also known to take a certain purge stream from the HP loop, to remove inerts that otherwise may accumulate and lower the overall efficiency.

US 4,383,982 discloses ammonia production process wherein the secondary reformer uses a quantity of air in excess of what would introduce one molecule of nitrogen per three molecules of hydrogen; ammonia synthesis is carried out at a pressure not much greater than pressure at which the synthesis gas is generated, and excess nitrogen is removed from the gas circulating in the synthesis section to an extent that the H₂:N₂ ratio of the gas entering the catalyst is still well below 3.0 and preferably 1.5 to 2.3.

A process for the production of ammonia and a process for the production of ammonia make-up syngas are also disclosed in EP-A-2 022 754.

The energy efficiency of a process for synthesis ammonia depends on the power needs of the main compression section and other auxiliaries, such as the circulator of the synthesis loop. These depends, in turn, on the required flow rate for a given output of ammonia and, then, on the yield of conversion of the make-up syngas into ammonia. There is an ever increasing need to optimize the energy efficiency, i.e. to reduce the power need for compression, circulation, etc... as well as the size and cost of equipments, in relation to the ammonia output.

### Summary of the invention

The aim of the invention is to increase the energy efficiency of the ammonia synthesis process as above disclosed.

The aim is reached with a process for the synthesis of ammonia, where a hydrocarbon feedstock is reformed obtaining a product gas, said product gas is subject to shift, carbon dioxide removal and methanation, obtaining a make-up syngas mainly composed of hydrogen and nitrogen, and having a H₂ to N₂ ratio less than 3; said make-up syngas is compressed in a main compression section and delivered to a high-pressure ammonia synthesis loop where a gas feed is converted into ammonia, and a purge stream is taken from said synthesis loop, characterized in that:
- hydrogen is separated from said purge stream, obtaining at least one hydrogen-rich gaseous stream, and
- said hydrogen-rich gaseous stream is returned to the ammonia synthesis loop, enriching the hydrogen content of the make-up syngas to an extent that the H₂ to N₂ ratio of the gas feed converted into ammonia is close to 3.

The invention provides that the H₂/N₂ ratio of the syngas actually fed to the catalytic reactor of the synthesis loop, and converted into ammonia, is adjusted to a value close to the stoichiometric, adding hydrogen recovered from the purge of the synthesis loop. Preferably, the H₂/N₂ ratio of the syngas converted into ammonia is in the range 2.9 to 3.1. Bringing the H₂/N₂ ratio of the feed of the reactor close to 3, has the advantage that conversion into ammonia is maximized. As a consequence, the ratio between the gas flow rate in the loop and the ammonia output is reduced to minimum, which means that size and power need of the main compression section and circulator are optimized.

The term of make-up syngas mainly composed of hydrogen and nitrogen is used in this description with reference to a synthesis gas as obtainable after reforming of a hydrocarbon source and the known processes of shift, CO₂ removal and methanation. Typically, the gas contains hydrogen and nitrogen, plus a low percentage of residual methane, argon or other inerts.

The purge gas stream may be taken upstream (suction side) or downstream of a circulator of the high-pressure synthesis loop.

The recovered, hydrogen-rich stream, or parts thereof, can be recycled to one or more of the following point, according to various embodiments of the invention: at the suction of the circulator of the synthesis loop; at the suction side of the main compression section; at the suction of any intermediate compression stage of said main compression section. In particular, in one embodiment of the invention, the main compression section comprises a plurality of inter-refrigerated compression stages; the hydrogen-rich stream recovered from the HP loop purge, or a part thereof, is then recycled to the suction of one or more of said compression stages.

A preferred embodiment is to feed at least a major part of said hydrogen-rich stream to the suction side of the circulator of the HP loop. It is preferred to feed all the hydrogen-rich stream to suction of the circulator, if the circulator is able to receive the total input flow rate. Further embodiments are possible where, for example, a portion of the H₂-rich stream is returned to the suction of the circulator, and another portion(s) is/are returned to one or more of the stages of the main compression section. Embodiments are also possible with recovery of different H₂-rich streams fed to different positions.

The syngas flow delivered by the circulator, and containing the recovered hydrogen, is preferably mixed with the syngas delivered by the main compression section, thus forming the gas feed which is then converted to ammonia.

According to an embodiment, hydrogen is separated with a PSA (pressure swing absorption) or TSA (temperature swing absorption) molecular sieve. According to another embodiment of the invention, hydrogen is separated with a cryogenic process. Prior to hydrogen removal, the purge stream is preferably treated to recover ammonia, according to known techniques.

A waste gas discharged from the PSA or TSA molecular sieve, or from the cryogenic section, can be used as fuel or to regenerate a water removal system.

The step of reforming the hydrocarbon feedstock preferably comprises a primary reforming with steam, and a secondary reforming with air or oxygen-enriched air.

According to one aspect of the invention, the front end is a high-pressure front-end with the primary reformer operating at a pressure of at least 35 bar, preferably in the range 40-100 bar and more preferably in the range 60-80 bar.

An aspect of the invention is also a plant adapted to carry out the above process. According to another aspect of the invention, a plant for the synthesis of ammonia comprises a reforming section, a shift reactor, a carbon dioxide removal unit, a methanator, a main syngas compression section, a high-pressure ammonia synthesis loop; said loop comprises at least one catalytic reactor for conversion of a gas feed into ammonia, and a syngas purge line; the plant is characterized by:
- a hydrogen recovery section fed with said syngas purge line, and adapted to produce a hydrogen-rich gaseous stream, and
- a return line of said hydrogen-rich gaseous stream to the ammonia synthesis loop, enriching the hydrogen content of the gas feed of the reactor of the synthesis loop, the hydrogen recovery being regulated so that the H₂/N₂ ratio of said gas feed is close to 3.

As stated above, the hydrogen recovery section preferably comprises a PSA or TSA device, or a cryogenic section, and an ammonia removal section and/or a water removal section, according to specific embodiments.

A process according to the invention, achieving H₂/N₂ ratio close to 3, needs to circulate a greater flow rate of purge gas than a prior art process, where the H₂/N₂ ratio at the inlet of the reactor is kept well below 3. This is due to the purge gas furnishing the hydrogen required to compensate for the excess of nitrogen in the syngas delivered by the front-end. The energy and cost required for circulation of the purge stream and hydrogen recovery are however overcompensated by the better efficiency of conversion achieved in the reactor.

A further advantage is that the modification of the H₂/N₂ ratio is obtained by processing a side (secondary) stream, i.e. the purge stream, rather than the main syngas feed. The volumetric flow rate through the ammonia recovery section, the water removal section, and the hydrogen recovery section is small and, then, the size and cost of these equipments is minimized.

A further advantage is that the recovered hydrogen-rich stream, or a major part thereof according to the selected embodiment, is subject to the relatively low difference of pressure across the circulator. No pressure loss is added to the main stream of syngas, that is the load of the main syngas compression section is not increased. Any treatment carried out on the syngas, e.g. downstream the methanation section, on the contrary, has the drawback of a certain pressure drop, which means a lower pressure at the suction of the main compression stage and, hence, increased load and energy consumption of the same section.

These and still further advantages of the invention will be elucidated with the help of the following description of preferred and non-limiting embodiments.

### Brief description of the drawings

Fig. 1 is a scheme of a plant for the synthesis of ammonia, comprising a recycle of hydrogen from the purge of the synthesis loop, according to an embodiment of the invention.
Fig. 2 is a scheme of the compression section and hydrogen recycle, in a variant of the scheme of Fig. 1.
Fig. 3 is a block scheme of the treatment of the purge gas, in a preferred embodiment of the invention.

### Detailed description of preferred embodiments

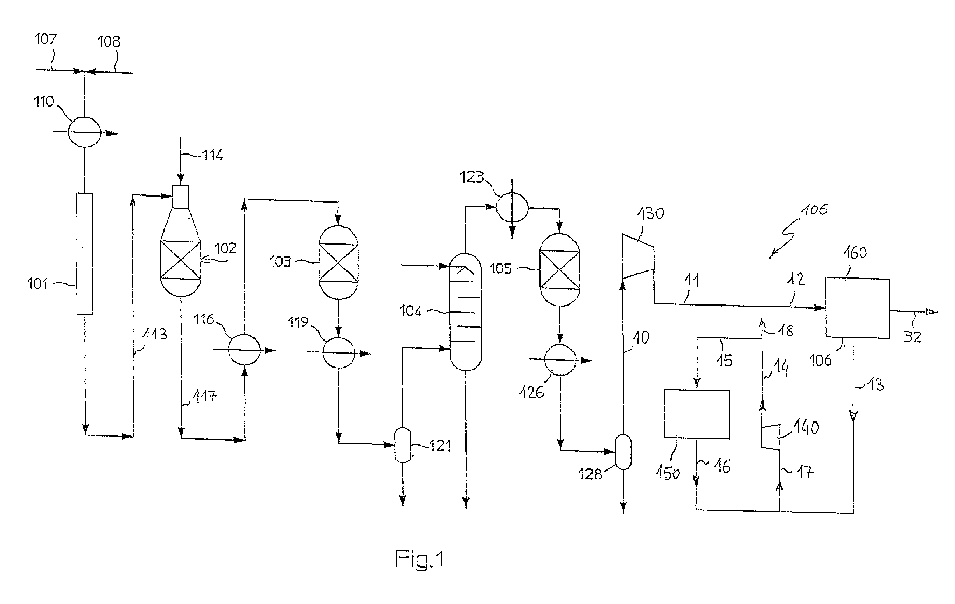

A plant for the synthesis of ammonia is shown in Fig. 1. The plant comprises a front-end section with the following main components: a reforming section comprising a primary reformer 101 and a secondary reformer 102; one or more shift converters 103, a CO₂ washing column 104, a methanator 105.

The front-end produces a syngas flow 10 to suction side of a main syngas compression section 130, feeding a high-pressure syngas 11 to a synthesis loop 106.

The loop 106 comprises a block 160, which in turn comprises at least one catalytic reactor and, usually, also a gas cooler and a liquid separator, to produce a liquid ammonia product 32. The circulation in the loop 106 is provided by a further compressor, also referred to as circulator, denoted with reference 140.

A suitable hydrocarbon source 107, such as natural gas, is mixed with a steam flow 108; the resulting mixture is passed in a pre-heater 110 and reacted in the primary reformer 101. The first product gas 113 obtained in the primary reformer is further oxidized in the secondary reformer 102 with the aid of an air supply 114. The product gas 117 of said secondary reformer is then treated in the downstream equipments including the shift converters 103, CO₂ washing column 104 and methanator 105, with intermediate gas cooling in the heat exchangers 116, 119 and 126, and re-heating in the heater 123 upstream the methanator 105. Liquid separation takes place at separators 121, 128.

The make-up syngas at streams 10 and 11 has a significant nitrogen in excess, due to nitrogen introduced with the air flow 114 in the secondary reformer 102. In operation the H₂/N₂ ratio of the streams 10, 11 is significantly less than 3, for example 2.5 or less.

The above process of hydrocarbon reforming in the front-end is known in the art and then is no further described.

The H₂/N₂ ratio of the gas flow 12, which is actually fed to the catalytic reactor in block 160, is regulated by mixing the main compressor delivery stream 11 with a hydrogen-rich stream 18. Said hydrogen-rich stream 18 is obtained by recovering the hydrogen content of the purge 15, passing the purge 15 into a hydrogen recovery section 150, and returning the so obtained H₂-rich stream 16 to the suction of the circulator 140.

In a preferred embodiment as shown in Fig. 1, the H₂/N₂ ratio of the gas feed 12 is controlled by the following steps:
- the purge gas flow 15 is taken from the delivery stream 14 of the circulator 140, dividing said delivery stream 14 into the purge flow 15 and a remaining main stream 18,
- hydrogen is separated from the purge gas flow, obtaining a hydrogen-rich gaseous stream 16,
- the hydrogen-rich gaseous stream 16 is returned to the suction of circulator 140, where it is mixed with unreacted gas 13, forming the input stream 17 of said circulator 140, and
- the main stream 18 is mixed with the make-up syngas 11.

The H₂ content of the delivery stream 14 is increased by the hydrogen returned via flow 16, enriching the suction stream 17. In this way the H₂-enriched stream 18 is obtained downstream the purge 15.

The recirculation of the hydrogen-rich gaseous stream 16 and mixing of the make-up gas 11 with the stream 18 are regulated so that the H₂/N₂ ratio of reactor syngas feed 12 is close to the stoichiometric value of 3.

The hydrogen recovery section 150 may comprise a PSA or a TSA molecular sieve for separating hydrogen from the gas current 15, and obtaining the H2-enriched stream 16. Further products of the hydrogen recovery section 150 are ammonia recovered by an ammonia recovery section, and waste gas. In another embodiment, hydrogen is separated by a cryogenic separator. The PSA/TSA molecular sieves or the cryogenic separator are provided according to per se known technique.

In Fig. 1, the purge flow 15 is taken at delivery side of the circulator 140; in another embodiment of the invention, the purge is taken at the suction side (flow 17) of said circulator 140.

The recovered, hydrogen-rich stream 16 is preferably recycled at the suction of the circulator 140, as shown, to minimize the energy requirements for compression. In alternative embodiments, however, the stream 16 or a part thereof can be mixed with the syngas at a lower pressure, namely at the suction of the main syngas compression section 130, or at the suction of one or more intermediate stages of the same.

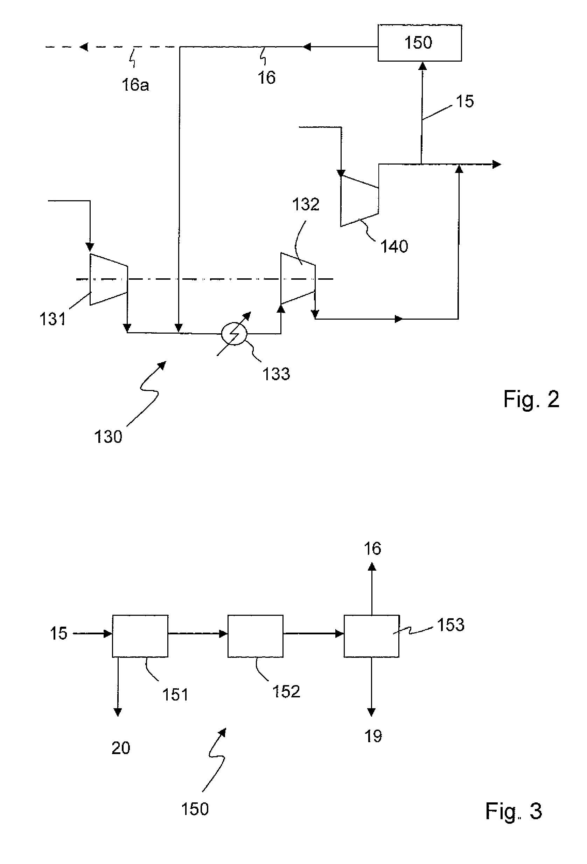

The overall compression section 130 may comprise a generic number n of stages. Referring to Fig. 2, an exemplificative embodiment is shown, where the hydrogen-rich stream 16 from the recovery section 150 is fed at the suction side of an *n*-th stage 132 of the main compression section 130, preferably upstream an inter-refrigerator 133 between said stage 132 and the previous *(n-1)*-th stage 131. Optionally, a portion 16a of the hydrogen-rich stream 16 is fed at a lower-pressure compression stage, such as the stage 131, and/or to the suction of the circulator 140. Hence, various embodiments are possible where different portions of the hydrogen-rich stream 16 are fed to the circulator 140 and to one or more stages of the compression section 130.

A detail of the recovery section 150, according to preferred embodiments, is given in Fig. 3. The purge gas 15 is fed to an ammonia recovery section 151, separating ammonia 20; the ammonia-free purge gas is then fed to an optional water removal section 152, and then to a H₂ separation block 153. Said H₂ separation block 153 delivers the H₂-rich stream 16 and a waste gas 19.

According to first embodiments, said H₂ separation block comprises a TSA molecular sieve or a PSA molecular sieve. According to a second embodiment, said H₂ separation block comprises a cryogenic separator. Provision of the water removal section 152 is necessary in combination with a cryogenic hydrogen separator.

The waste gas 19 can be recycled directly as fuel for the primary reformer 101, or used to re-generate the water removal section 152 before being recycled as fuel in said primary reformer 101.

The primary reformer 101 is for example equipped with catalytic tubes. In a preferred embodiment, the operating pressure in the catalytic tubes is more than 35 bar; preferably 40-100 bar and more preferably 60-80 bar.

The invention achieve the above stated aims and purposes. The slightly increase in the consumption of the circulator 140, due to recycle of hydrogen via the streams 15, 16 and 17, is well compensated by the fact that the yield of conversion is maximized by feeding to the reactor a make-up syngas 12 with H₂/N₂ ratio close to stoichiometric value. Moreover, removal of the excess nitrogen in the main stream 11 is obtained by processing only the purge stream 15, which is significantly less expensive than processing the larger main stream 11, in terms of size of the various equipments, and the pressure at the suction 10 of the main compressor is not affected.

## Claims

1. A process for the synthesis of ammonia, where a hydrocarbon feedstock is reformed obtaining a product gas, said product gas is subject to shift, carbon dioxide removal and methanation, obtaining a make-up syngas (10) mainly composed of hydrogen and nitrogen, and having a H₂ to N₂ ratio less than 3; said make-up syngas (10) is compressed in a main compression section (130) and delivered to a high-pressure ammonia synthesis loop (106) where a gas feed (12) is converted into ammonia, and a purge stream (15) is taken from said synthesis loop, **characterized in that**:
- hydrogen is separated from said purge stream, obtaining at least one hydrogen-rich gaseous stream (16), and
- said hydrogen-rich gaseous stream (16) is returned to the ammonia synthesis loop, enriching the hydrogen content of the make-up syngas to an extent that the H₂ to N₂ ratio of the gas feed (12) converted into ammonia is close to 3.

2. A process according to claim 1, the H₂ to N₂ ratio of said gas feed (12) being in the range 2.9 to 3.1.

3. A process according to claim 1, said purge gas stream (15) being taken either at the suction side of a circulator (140) of the high-pressure synthesis loop, or at delivery side of said circulator.

4. A process according to any of claims 1 to 3, said hydrogen-rich gaseous stream (16), or parts (16a) of said gaseous stream, being returned to one or more of the following: the suction side of a circulator (140) of the synthesis loop; the suction side of the main compression section (130); the suction of an intermediate compression stage (131, 132) of the main compression section.

5. A process according to claim 4, where at least a major portion of the hydrogen-rich gaseous stream (16) is returned to the suction side of the circulator (140).

6. A process according to claim 4, where a syngas flow (18) delivered by the circulator (140) and containing recirculated hydrogen furnished by said hydrogen-rich gaseous stream (6), is mixed with the syngas (11) delivered by the main compression section (130), thus forming the gas feed (12) with adjusted H2/N2 ratio, which is converted to ammonia.

7. A process according to claim 6, where:
- a purge gas flow (15) is taken from the delivery stream (14) of a circulator (140) of the high-pressure loop, so that said delivery stream (14) of the circulator is divided into said purge gas flow and a main gas stream (18);
- hydrogen is separated from the purge gas flow, obtaining a hydrogen-rich gaseous stream 16,
- the hydrogen-rich gaseous stream 16 is returned to the suction of circulator 140, where it is mixed with unreacted gas 13, forming the input stream 17 of said circulator 140, and
- said main gas stream (18) from the circulator is mixed with the make-up syngas (11) delivered by the main syngas compression section.

8. A process according to any one of the preceding claims, where hydrogen is separated from the purge gas stream by means of one of the following: a PSA molecular sieve; a TSA molecular sieve; a cryogenic separator.

9. A process according to any one of the preceding claims, where reforming of the hydrocarbon feedstock is carried out in a steam primary reformer and in a subsequent secondary reformer fed with air or enriched air.

10. A process according to claim 9, where the operating pressure of said primary reformer is greater than 35 bar and preferably in the range 40-100 bar.

11. A plant for the synthesis of ammonia, comprising:
- a reforming section (101, 102), a shift reactor (103), a carbon dioxide removal unit (104), a methanator (105), a main syngas compression section (130),
- a high-pressure ammonia synthesis loop (106), said loop comprising at least one catalytic reactor for conversion of a gas feed (12) into ammonia, and a syngas purge line (15),
the plant being **characterized by**:
- a hydrogen recovery section (150) fed with said syngas purge line, and adapted to produce a hydrogen-rich gaseous stream (16), and
- a return line of said hydrogen-rich gaseous stream (16) to the ammonia synthesis loop, enriching the hydrogen content of the gas feed (12) of the reactor of the synthesis loop (106), the hydrogen recovery being regulated so that the H₂/N₂ ratio of said gas feed (12) is close to 3.
